# EUROPÄISCHE PATENTSCHRIFT

(11) **EP 2 140 596 B1**
(45) Veröffentlichungstag und Bekanntmachung des Hinweises auf die Patenterteilung: **05.01.2011**
(21) Anmeldenummer: 08734780.3
(22) Anmeldetag: 26.03.2008
(51) Int. Cl.: H04L 1/16

(54) **KOMMUNIKATIONSSYSTEM UND VERFAHREN MIT BESTIMMUNG VON KANALPARAMETERN**
COMMUNICATION SYSTEM AND METHOD FOR DETERMINING CHANNEL PARAMETERS
SYSTÈME DE COMMUNICATION ET PROCÉDÉ AVEC DÉTERMINATION DE PARAMÈTRES DE CANAL

(30) Priorität: 24.04.2007 DE 102007019292
(43) Veröffentlichungstag der Anmeldung: 06.01.2010
(73) Patentinhaber: Rohde & Schwarz GmbH & Co. KG, 81671 München (DE)
(72) Erfinder: LANGGUTH, Torsten, 82008 Unterhaching (DE); SCHOBER, Henrik, 85457 Wörth (DE)
(74) Vertreter: Körfer, Thomas
(86) Internationale Anmeldenummer: PCT/EP2008/002382
(87) Internationale Veröffentlichungsnummer: WO 2008/128614

(56) Entgegenhaltungen:
- EP-A- 1 770 889
- WO-A-00/52868
- WO-A-01/80476
- WO-A-2006/130804
- SOO-YONG JEON ET AL: "Energy-efficient channel quality indication (CQI) feedback scheme for UMTS high-speed downlink packet access" VEHICULAR TECHNOLOGY CONFERENCE, 2005. VTC-2005-FALL. 2005 IEEE 62ND DALLAS, TX, USA 25-28 SEPT., 2005, PISCATAWAY, NJ, USA,IEEE, Bd. 1, 28. September 2005 (2005-09-28), Seiten 245-249, XP010878459 ISBN: 978-0-7803-9152-9

## Beschreibung

Die Erfindung bezieht sich auf eine Vorrichtung und ein Verfahren zur Bestimmung von Kanalparametern eines Übertragungskanals in einem Kommunikationssystem.

Die Eigenschaften eines Übertragungskanals in einem Kommunikationssystem, insbesondere in einem mobilen Kommunikationssystem, sind zeitlichen Schwankungen unterworfen, so dass es sinnvoll ist, die Übertragungseigenschaften des Übertragungskanals dynamisch an diese Schwankungen anzupassen, um die Nutzdaten immer mit einer hohen Datenrate bei einer geringen Fehlerrate (z.B. Bitfehlerrate BER) über einen optimal konfigurierten Kanal zu übertragen.

Datenübertragungen generell, insbesondere aber im Bereich der Funkübertragung unterliegt ständig zunehmenden Forderungen an die erreichbare Datenrate, insbesondere an die erreichbare Nettodatenrate. Adaptive Modulationstechniken sind dabei eine Möglichkeit, mittels einer besseren Anpassung der Übertragung an die Kanaleigenschaften des Übertragungskanals eine höhere Datenrate zu erreichen. Um Kanalparameter an den Übertragungskanal anzupassen, sollten die Kanaleigenschaften möglichst genau gekannt werden. Dazu werden im Allgemeinen Abschätzungsmechanismen, insbesondere im Empfänger verwendet, da lediglich im Empfänger eine Aussage über die Eigenschaften des gerade genutzten Übertragungskanal gemacht werden kann. Die in den Kanalparametern enthaltenen, im Empfänger abgeschätzten Kanaleigenschaften können von diesem für die Übertragung in die entgegengesetzte Richtung verwendet werden, was einem rückführungslosen Verfahren bzw. einem open-loop Verfahren entspricht.

Die im Empfänger abgeschätzten Kanaleigenschaften können auch von diesem an den Sender rückübertragen werden und vom Sender für die Adaption des Übertragungskanals für einen zeitnah anstehenden Übertragungsvorgang genutzt werden. Dieses Verfahren entspricht einem rückgeführten bzw. einem closed-loop Verfahren. Da die Übertragungskanäle nicht immer eine Symmetrie bzgl. der Übertragungsrichtung aufweisen, sind Kanalparameter, die mittels des closed-loop Verfahrens bestimmt wurden, für eine zeitnahe und genaue Beschreibung bzw. Modellierung des Übertragungskanals meist geeigneter. Ein Nachteil des closed-loop Verfahrens besteht darin, dass die Übermittlung der Kanalparameter Übertragungsressourcen belegt und einen erhöhten Signalisierungsaufwand erzeugt.

In der EP 1770889 wird ein sogenannter - CQI als Übertragungsqualität und eine Quittierungs-/Nichtquittierungsinformation ACK/NACK als kontrolldaten zu einem Gender übertragen um die Datenübertragung zu verbessern.

In der WO 2005/083953 A1 sind Verfahren angegeben, die sich auf eine Auswahl von Linkgütemetriken, eine Änderung der Strategien zur Verbindungsanpassung bzw. auf eine Klassifizierung der Verbindungsgüte beziehen. Das Verfahren zur Auswahl von Linkgütemetriken erstreckt sich sowohl auf rückführungslose Messungen (open loop) als auch auf rückgeführte Messungen (closed loop) der Kanaldynamik eines Übertragungspfads. Dieses Verfahren beinhaltet, dass von einem ersten Netzknoten eine Funkverbindung ausgeht, welche über eine Nachrichtenverbindung einen zweiten Netzknoten adressiert, wobei am zweiten Netzknoten die Kanaldynamik des Übertragungskanals unter Berücksichtigung der Varianz bzw. des mittleren Abweichungsbetrags der gemessenen Linkgütemetriken abgeschätzt wird.

Der Erfindung liegt die Aufgabe zu Grunde ein Kommunikationssystem und ein Verfahren mit einer effizient arbeitenden rückgeführten Auswertemethode (closed loop) für eine optimale Kanalkonfiguration in einem Übertragungssystem anzugeben, die die Vorteile einer rückführungslosen Auswertemethode (open loop), insbesondere den Vorteil einer zeitoptimierten Kanalkonfiguration, mit sich bringt und keinen erhöhten Signalisierungsaufwand nach sich zieht.

Bezüglich eines Kommunikationssystems, das diese Erfordernisse erfüllt, ergibt sich die erfindungsgemäße Lösung der genannte Aufgabe durch die gattungsbildenden Merkmale des Oberbegriffs des Anspruchs 1 in Zusammenhang mit den Merkmalen des kennzeichnenden Teils des Anspruchs 1. Vorteilhafte Weiterbildungen sind Gegenstand der auf Anspruch 1 rückbezogenen Unteransprüche 2 bis 13.

Bezüglich eines Verfahrens, das diese Erfordernisse erfüllt, ergibt sich die erfindungsgemäße Lösung der genannte Aufgabe durch die gattungsbildenden Merkmale des Oberbegriffs des Anspruchs 14 in Zusammenhang mit den Merkmalen des kennzeichnenden Teils des Anspruchs 14. Vorteilhafte Weiterbildungen des erfindungsgemäßen Verfahrens sind Gegenstand der auf Anspruch 14 rückbezogen Unteransprüche 15 bis 27.

So bezieht sich die erfindungsgemäße Vorrichtung zur Bestimmung von Kanalparametern eines Übertragungskanals auf ein Kommunikationssystem, welches zumindest einen Sender und zumindest einen Empfänger aufweist. Die Bestimmung der Kanalparameter ist vorteilhafterweise nach einem erfolgreichen Aufbau einer Nachrichtenverbindung mit dem Empfänger in diesem vorgesehen. Dabei ist über eine geschlossene, den Übertragungskanal umfassende Signalisierungsschleife eine Rückübertragung der vorher ermittelten Kanalparameter an den Sender vorgesehen. Vorteilhafterweise ist für einen Betrieb des Kommunikationssystems ein Bestätigungsmodus vorgesehen, der mittels ohnehin zu übertragenden Bestätigungspaketen auch darin die rückzuübertragende Kanalparameter über die Signalisierungsschleife zum Sender zurückschickt.

Dadurch erhält der Sender vorteilhafterweise aktuelle Informationen über die Beschaffenheit des zeitnah in der Vergangenheit genutzten Übertragungskanals, so dass sich der Sender aufgrund der erhaltenen Informationen selbst so konfiguriert, dass ein maximaler Datendurchsatz bei einer minimalen Fehlerrate gewährleistet ist. Dieser Vorteil wirkt sich auch auf den Empfänger aus, sobald er die Senderfunktion übernimmt. Durch diese Art der Rückübertragung von Kanalparametern wird einer eventuell vorhandenen Asymmetrie des Übertragungskanals Rechnung getragen, da sowohl Sender als auch Empfänger beim jeweiligen Senden sich mit den aktuellen und rückübertragenen Kanalparametern optimal konfigurieren.

Außerdem ist es von Vorteil, dass die Bestimmung der Kanalparameter bzw. die Bestimmung der aktuellen Information über den genutzten Übertragungskanal in regelmäßigen zeitlichen Abständen vorgesehen ist.

Vorteilhafterweise ist der dabei vorgesehene zeitliche Abstand zwischen zwei zeitlich aufeinanderfolgenden Bestimmungen der Kanalparameter keine feststehende und statische Größe, sondern ist durch die Wahl des Protokolls der Datensicherungsschicht variabel.

Es ist zudem von Vorteil, dass die Kanalparameter bezüglich des genutzten Übertragungskanals beim erfindungsgemäßen Kommunikationssystem automatisch ermittelt und übertragen werden, so dass der dafür notwendige Signalisierungsaufwand sehr gering ist.

Außerdem besteht ein weiterer Vorteil des erfindungsgemäßen Kommunikationssystems darin, dass ein closed-loop Verfahren und ein open-loop Verfahren nicht gemeinsam implementiert sind, so dass kein Aufwand für einen Entscheidungsprozess bezüglich der Anwendung einer der beiden Verfahren notwendig ist.

Vorteilhafterweise reduziert die vorliegende Erfindung den Signalisierungsaufwand, was sich günstig auf die Nettodatenrate auswirkt.

Zudem ist es vorteilhaft, dass der Übertragungskanal bidirektional ist und zumindest ein Halb-Duplex Verfahren als Kanalzugriffsverfahren aufweist, wobei Kanalparameter für beide Übertragungsrichtungen ermittelt werden.

Außerdem weist das Kommunikationssystem vorteilhafterweise eine Architektur mit gleichberechtigten Netzteilnehmern bzw. mit zumindest einem gleichberechtigtem Sender und mit zumindest einem gleichberechtigtem Empfänger auf, wodurch ein aufwendiges Protokoll für einen priorisierten bzw. einen nachrangigen Kanalzugriff obsolet ist.

Die Architektur bzw. die Topologie des Kommunikationssystems ist zusätzlich vorteilhafterweise zeitlich veränderlich. Auch kann die Funktionalität eines Endgeräts und die Funktionalität einer Infrastruktureinheit in einem Gerät vereint sein.

Der Kanalparameter stellt ein Bewertungskriterium für eine Kanalgüte des Übertragungskanals dar. Anhand dieses Bewertungskriteriums kann der Sender beispielsweise das notwendige Maß an Kanalcodierung bzw. hinzuzufügender Redundanz einstellen, so dass die Daten über einen optimalen Übertragungskanal mit einem maximalen Durchsatz bei einer gleichzeitigen minimalen Fehlerrate übertragen werden.

Vorteilhafterweise kann dabei das Bewertungskriterium für die Kanalgüte des Übertragungskanals wahlweise eine Symbolfehlerrate (SER), eine Bitfehlerrate (BER), eine Bytefehlerrate (ByER), eine Paketfehlerrate (PER), eine Rahmenfehlerrate (FER), ein Signalrauschabstand (SNR), eine Empfangsfeldstärke (RSS) oder eine Kombination aus zumindest zwei der genannten Kanalgütewerte enthalten.

Dabei ist es von Vorteil, dass mit den ermittelten Kanalgütewerten eine Abschätzung bzw. ein Trend für das zukünftige Verhalten des Übertragungskanals angegeben werden kann, was wiederum die Konfiguration des Senders für einen anstehenden Übertragungsvorgang günstig beeinflusst.

Des weiteren ist es von Vorteil, dass als Kanalparameter eine im Empfänger messtechnisch bestimmte Übertragungsfunktion inklusive einer Entzerrungsfunktion vorgesehen ist, so dass Verzerrungen auf einem Übertragungskanal vom Sender zeitoptimiert kompensiert werden und eine gesicherte und unverzerrte Datenübertragung gewährleistet ist.

Zudem sieht die erfindungsgemäße Vorrichtung vor, dass für den Bestätigungsmodus verschiedene Quittierungsprotokolle gewählt werden können, so dass die erfindungsgemäße Vorrichtung flexibel einsetzbar ist.

Außerdem ist es von Vorteil, dass die Nachricht, die ein oder mehrere Bestätigungspakete transportiert, reservierte Bits oder Bytes aufweist, die es erlauben die Kanalparameter dort einzufügen.

Ausführungsbeispiele der vorliegenden Erfindung werden nachfolgend beschrieben. Sowohl die Struktur als auch die Betriebsweise der Erfindung sowie deren weitere Vorteile und Aufgaben sind am besten anhand der folgenden Beschreibung in Verbindung mit der dazugehörigen Zeichnungen verständlich. In der Zeichnung zeigt:
- Fig. 1: den zeitlichen Verlauf eines Nachrichtenaustausches im Bestätigungsmodus zwischen einem Sender und einem Empfänger;
- Fig. 2: das Schema des erfindungsgemäßen Verfahrens;
- Fig. 3: ein Bestätigungspaket des erfindungsgemäßen Verfahrens bzw. der erfindungsgemäßen Vorrichtung und
- Fig. 4: das erfindungsgemäße Verfahren als Flussdiagramm, sowohl empfängerseitig als auch senderseitig.

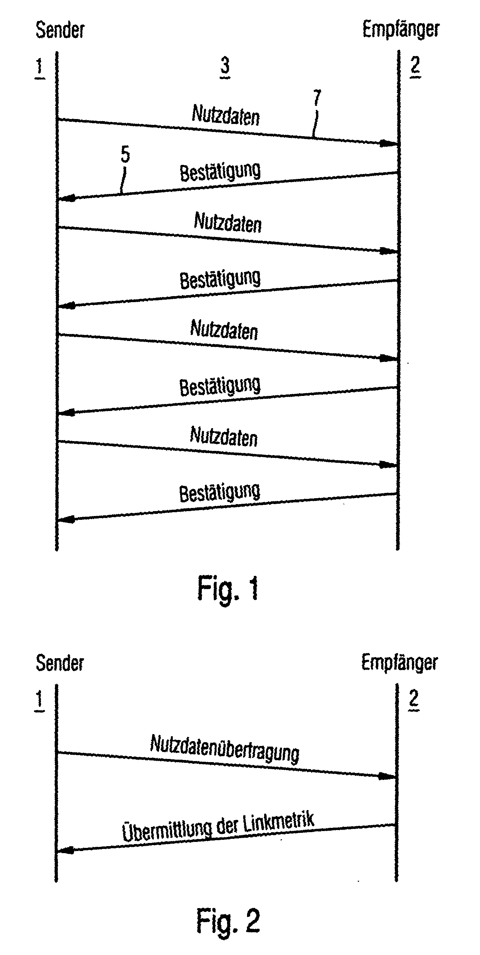

Fig. 1 zeigt den zeitlichen Verlauf eines üblichen Nachrichtenaustausches im Bestätigungsmodus zwischen einem Sender 1 und einem Empfänger 2. Jede Nutzdaten 7 enthaltende Nachricht wird mit einem Bestätigungspaket 5 quittiert.

Das erfindungsgemäße Verfahren zur Bestimmung von Kanalparametern eines Übertragungskanals 3 geht aus von einem Kommunikationssystem, welches zumindest einen Sender 1 und zumindest einen Empfänger 2 aufweist. Die Bestimmung der Kanalparameter ist im Empfänger 2 vorgesehen, wobei über eine geschlossene Signalisierungsschleife, die auch den betrachteten Übertragungskanal 3 enthält, eine Rückübertragung der aktuell ermittelten Kanalparameter an den Sender 1 vorgesehen ist.

Erfindungsgemäß ist für einen Betrieb des Kommunikationssystems ein Bestätigungsmodus vorgesehen. In diesem Bestätigungsmodus werden mittels vom Empfänger 2 zum Sender 1 bzw. vom Sender 1 zum Empfänger 2 zu übertragenden bzw. rückzuübertragenden Bestätigungspaketen 5, die aktuellen Kanalparameter ermittelt und übertragen, wobei die geschlossene Signalisierungsschleife den Übertragungskanal 3 nutzt. Dies ist in Fig. 2 der Zeichnung dargestellt, wobei die Linkmetrik sich auf die ermittelten Kanalparameter bezieht.

Eine weitere Funktionalität des erfindungsgemäßen Verfahrens beinhaltet eine sich in regelmäßigen zeitlichen Abständen wiederholende Bestimmung der Kanalparameter. Dadurch ist gewährleistet, dass die Parametrisierung des Übertragungskanals fortwährend und möglichst zeitnah im Hinblick auf einen anstehenden Übertragungsvorgang aktualisiert wird.

Der zeitliche Abstand zwischen zwei aufeinanderfolgenden Bestimmungen der Kanalparameter bzw. zwischen zwei aufeinanderfolgenden Charakterisierungen des Übertragungskanals 3 durch die gemessenen Kanalparameter ist variabel. Dadurch kann das mittels der gemessenen Kanalparameter ermittelte Modell für den Übertragungskanal 3 dynamisch und optimal an schnelle oder langsame Änderungen der Übertragungsbedingungen angepasst werden.

Der Übertragungskanal 3 innerhalb des Kommunikationssystems ist vorzugsweise bidirektional und weist ein Halb-Duplex Verfahren als Kanalzugriffsverfahren auf, so dass eine Nachrichtenübertragung von einem ersten Knoten (i.e. Sender 1) zu einem zweiten Knoten (i.e. Empfänger 2) sowie eine Nachrichtenübertragung in umgekehrter Richtung von dem zweiten Knoten zu dem ersten Knoten ermöglicht ist.

Das erfindungsgemäße Kommunikationssystem weist vorzugsweise eine Architektur mit gleichberechtigten Netzteilnehmern (Peer-to-Peer Kommunikationsnetz) bzw. eine Architektur mit zumindest einem gleichberechtigtem Sender 1 und zumindest einem gleichberechtigtem Empfänger 2 auf, wobei die Architektur des Kommunikationssystems vorzugsweise zeitlich veränderlich ist. Eine zeitlich veränderliche Architektur bzw. Topologie findet sich beispielsweise in mobilen Adhoc-Netzwerken, deren Endgeräte sowohl die Funktionalität eines teilnehmenden Endgeräts als auch die Funktionalität einer Infrastruktureinheit haben.

Die erfindungsgemäße Vorrichtung umfasst als Kanalparameter zumindest ein Bewertungskriterium für eine Kanalgüte des Übertragungskanals in dem Kommunikationssystem. Das Bewertungskriterium für die Kanalgüte des Übertragungskanals umfasst wahlweise einen oder mehrere der folgenden Werte: Symbolfehlerrate (SER), Bitfehlerrate (BER), Bytefehlerrate (ByER), Paketfehlerrate (PER), Rahmenfehlerrate (FER), Signalrauschabstand (SNR), Empfangsfeldstärke (RSS) am Empfänger 2 bzw. am Sender 1 bei einer entgegengesetzt gerichteten Übertragung.

Die Kanalparameter charakterisieren die messtechnisch bestimmte Übertragungsfunktion inklusive einer Entzerrungsfunktion, welche periodisch und zeitnah im Hinblick auf in der Zukunft vorgesehene Nachrichtenübertragungen bestimmt werden.

Der Bestätigungsmodus zur gesicherten Nutzdatenübertragung innerhalb des Kommunikationssystems ist durch ein Protokoll oder durch mehrere Protokolle der im folgenden aufgeführten Schicht-2 Protokolle realisiert:
ein einfaches Quittierungsprotokoll ohne Zeitüberwachung,
ein Quittierungsprotokoll mit Zeitüberwachung,
ein Quittierungsprotokoll, welches auf einer Verwendung von Folgenummern basiert und/oder
ein Fensterprotokoll.

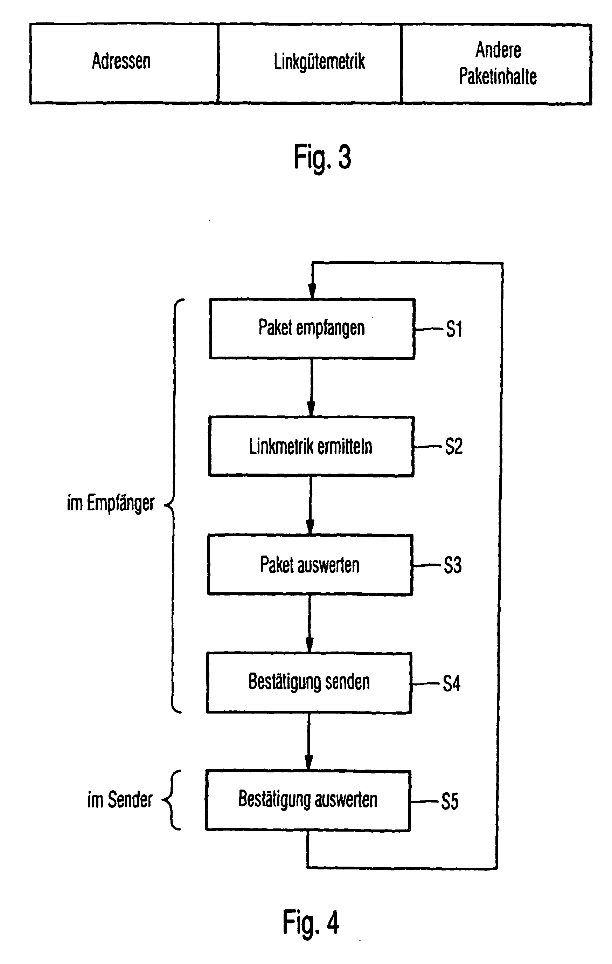

Es ist vorteilhaft, wenn die Bestätigungspakete 5 reservierte Bits oder Bytes aufweist, welche für die Codierung der gemessenen Kanalparameter bzw. für die Codierung der Linkgütemetrik genutzt werden. Ein mögliches Schema, wie die Linkgütemetrik in eine Schicht-2 Nachricht eingefügt ist, ist in Fig. 3 dargestellt. Jedes Bestätigungspaket 5 hat einen Adressbereich und einen Datenbereich, in welchem die Linkgütemetrik zwischen andere Paketinhalte eingefügt ist.

Das erfindungsgemäße Verfahren zur Bestimmung von Kanalparametern eines Übertragungskanals in einem Kommunikationssystem geht von zumindest einem Sender und einem Empfänger aus, wobei die Kanalparameter im Empfänger ermittelt werden. Sender und Empfänger bilden innerhalb des Kommunikationssystems eine geschlossene, den Übertragungskanal umfassende Signalisierungsschleife, wobei die im Empfänger bestimmten Kanalparameter über die geschlossene Signalisierungsschleife an den Sender rückübertragen werden. Das Kommunikationssystem wird bei dem erfindungsgemäßen Verfahren in einem Bestätigungsmodus betrieben, wobei auf der geschlossenen Signalisierungsschleife Bestätigungspakete übertragen werden, in die die vom Empfänger zum Sender rückzuübertragenden Kanalparameter der Signalisierungsschleife eingefügt werden. Dies ist in den Figuren 1 und 2 der Zeichnung schematisch dargestellt.

Das erfindungsgemäße Verfahren geht bevorzugt davon aus, dass die Kanalparameter in regelmäßigen zeitlichen Abständen wiederholt bestimmt werden, wobei diese Abstände variabel sind, so dass der zeitliche Abstand zwischen zwei aufeinanderfolgenden Bestimmungen der Kanalparameter nicht notwendiger Weise konstant ist.

Auf dem Übertragungskanal des erfindungsgemäßen Verfahrens ist es vorgesehen, dass Nachrichten bidirektional übertragen werden, wobei bevorzugt ein Halb-Duplex Verfahren zum Tragen kommt.

Fig. 4 zeigt das erfindungsgemäße Verfahren als Flussdiagramm, sowohl empfängerseitig als auch senderseitig. Im Empfänger 2 wird im Schritt S1 über eine vorher aufgebaute Nachrichtenverbindung ein Nutzdatenpaket 7 bzw. ein Paket empfangen. Anschließend werden im Empfänger 2 die Kanalparameter bzw. die den ermittelten Kanalparametern entsprechende Linkmetrik der genutzten Nachrichtenverbindung im Schritt S2 ermittelt und gleichzeitig oder nachfolgend das empfangene Paket gemäß des implementierten Schicht-2 Protokolls im Schritt S3 ausgewertet. Im Anschluss daran wird die vorher ermittelte Linkmetrik in eine Bestätigungsnachricht bzw. in ein Bestätigungspaket 5 verpackt und auf der bereits genutzten oder auf einer neu aufgebauten Nachrichtenverbindung zum Sender 1 im Schritt S4 übermittelt. Unter Linkmetrik wird hier der ausgewertete Kanalparameter bzw. die Zusammenfassung der mehreren ausgewerteten Kanalparameter verstanden. Senderseitig wird nun das empfangene Bestätigungspaket 5 bzgl. der Kanalparameter des Übertragungskanals 3 vom Sender 1 zum Empfänger 2 Im Schritt S5 ausgewertet.

Eine Besonderheit des erfindungsgemäßen Verfahrens besteht darin, dass die für den Bestätigungsverkehr ohnehin vorhandenen Bestätigungspakete 5, die in der Regel ungenutzte Bits bzw. Bytes enthalten, für die Übermittlung des Kanalparameters bzw. der mehreren Kanalparameter genutzt wird. Die Übermittlung der geschätzten Kanalqualität belegt daher keine Übertragungsresourcen und führt nicht zu einem zusätzlichen Overhead, sondern die für den Bestätigungsverkehr genutzten Bestätigungspakete werden für einen weiteren Zweck, nämlich die Rückmeldung der Kanalqualität an den Sender, benutzt. Somit entsteht eine effiziente und schnelle closed loop Signalisierung der Kanaleigenschaften. Der Sender hat ohne weiteren Overhead die Kenntnis über die Eigenschaften des Kanals und kann schnell auf Änderungen des Kanals reagieren. Eine gute Anpassung an die Übertragungsqualität des Kanals wird durch häufigen Austausch der closed loop Information erreicht. Spezielle Monitorpakte nur für die Rückmeldung der Kanalqualität müssen zusätzlich zu den Bestätigungspaketen nicht übertragen werden. Die zusätzlich benötigte Bandbreite für die Linkmetrik ist im Vergleich zu der für die Übertragung der Bestätigungspakete ohnehin benötigten Bandbreite vernachlässigbar.

Die Erfindung ist nicht auf das in der Zeichnung dargestellte Ausführungsbeispiel beschränkt. Alle vorstehend beschriebenen und in der Zeichnung dargestellten Merkmale sind beliebig miteinander kombinierbar.

## Patentansprüche

1. Kommunikationssystem mit Bestimmung von Kanalparametern eines Übertragungskanals,
wobei das Kommunikationssystem zumindest einen Sender (1) und zumindest einen Empfänger (2) aufweist und die Bestimmung der Kanalparameter in dem Empfänger (2) erfolgt,
wobei über eine geschlossene, den Übertragungskanal (3) umfassende Signalisierungsschleife eine Rückübertragung (4) der Kanalparameter an den Sender (1) erfolgt und
wobei ein Bestätigungsmodus mittels zu übertragenden Bestätigungspaketen (5) vom Empfänger (2) zum Sender (1) vorgesehen ist und die zu übertragenden Bestätigungspakete (5) auch die vom Empfänger (2) zum Sender (1) rückzuübertragenden Kanalparameter der Signalisierungsschleife enthalten,
**dadurch gekennzeichnet,**
**dass** als Kanalparameter eine im Empfänger (2) messtechnisch bestimmte Übertragungsfunktion inklusive einer Entzerrungsfunktion vorgesehen ist, so dass Verzerrungen auf dem Übertragungskanal (3) vom Sender (1) zeitoptimiert kompensiert werden.

2. Kommunikationssystem nach Anspruch 1,
**dadurch gekennzeichnet,**
**dass** eine sich in regelmäßigen zeitlichen Abständen wiederholende Bestimmung der Kanalparameter vorgesehen ist.

3. Kommunikationssystem nach Anspruch 2,
**dadurch gekennzeichnet,**
**dass** der zeitliche Abstand zwischen zwei aufeinanderfolgenden Bestimmungen der Kanalparameter variabel ist.

4. Kommunikationssystem nach einem der Ansprüche 1 bis 3,
**dadurch gekennzeichnet,**
**dass** der Übertragungskanal bidirektional ist und zumindest ein Halb-Duplex-Verfahren als Kanalzugriffsverfahren Verwendung findet.

5. Kommunikationssystem nach einem der Ansprüche 1 bis 4,
**dadurch gekennzeichnet,**
**dass** das Kommunikationssystem eine Architektur mit gleichberechtigten Netzteilnehmern, insbesondere mit zumindest einem gleichberechtigten Sender (1) und zumindest einem gleichberechtigten Empfänger (2) aufweist.

6. Kommunikationssystem nach Anspruch 5,
**dadurch gekennzeichnet,**
**dass** die Architektur des Kommunikationssystems zeitlich veränderlich ist.

7. Kommunikationssystem nach einem der Ansprüche 1 bis 6,
**dadurch gekennzeichnet,**
**dass** als Kanalparameter zumindest ein Bewertungskriterium für die Kanalgüte des Übertragungskanals (3) vorgesehen ist.

8. Kommunikationssystem nach Anspruch 7,
**dadurch gekennzeichnet,**
**dass** das Bewertungskriterium für die Kanalgüte des Übertragungskanals (3) eine Symbolfehlerrate SER oder eine Bitfehlerrate BER oder eine Bytefehlerrate ByER oder eine Paketfehlerrate PER oder eine Rahmenfehlerrate FER oder ein definierter Signalrauschabstand SNR oder eine definierte Empfangsfeldstärke RSS oder eine Kombination aus zumindest zwei der vorstehend genannten Kanalgütewerten enthält.

9. Kommunikationssystem nach einem der Ansprüche 1 bis 8,
**dadurch gekennzeichnet,**
**dass** der Bestätigungsmodus ein einfaches Quittierungsprotokoll ohne Zeitüberwachung aufweist.

10. Kommunikationssystem nach einem der Ansprüche 1 bis 8,
**dadurch gekennzeichnet,**
**dass** der Bestätigungsmodus ein einfaches Quittierungsprotokoll mit Zeitüberwachung aufweist.

11. Kommunikationssystem nach einem der Ansprüche 1 bis 10,
**dadurch gekennzeichnet,**
**dass** der Bestätigungsmodus ein auf einer Verwendung von Folgenummern basierendes Quittierungsprotokoll aufweist.

12. Kommunikationssystem nach einem der Ansprüche 1 bis 11,
**dadurch gekennzeichnet,**
**dass** der Bestätigungsmodus ein Fensterprotokoll aufweist.

13. Kommunikationssystem nach einem der Ansprüche 1 bis 12,
**dadurch gekennzeichnet,**
**dass** jedes Bestätigungspaket (5) einer Nachricht entspricht, welche reservierte Bits oder Bytes aufweist, die zumindest teilweise für die Rückübertragung der Kanalparameter verwendet werden.

14. Verfahren zur Bestimmung von Kanalparametern eines Übertragungskanals (3) in einem Kommunikationssystem mit zumindest einem Sender (1) und einem Empfänger (2),
wobei die Kanalparameter von dem Empfänger (2) ermittelt werden,
wobei eine geschlossene, den Übertragungskanal (3) umfassende Signalisierungsschleife gebildet wird und wobei die am Empfänger (2) bestimmten Kanalparameter über die geschlossene Signalisierungsschleife an den Sender (1) rückübertragen werden und
wobei das Kommunikationssystem in einem Bestätigungsmodus betrieben wird und auf der geschlossenen Signalisierungsschleife Bestätigungspakete (5) übertragen werden, in welche auch die vom Empfänger (2) zum Sender (1) rückzuübertragenden Kanalparameter der Signalisierungsschleife eingefügt werden
**dadurch gekennzeichnet,**
**dass** als Kanalparameter eine im Empfänger (2) messtechnisch bestimmte Übertragungsfunktion inklusive einer Entzerrungsfunktion vorgesehen ist, so dass Verzerrungen auf dem Übertragungskanal (3) vom Sender (1) zeitoptimiert kompensiert werden.

15. Verfahren nach Anspruch 14,
**dadurch gekennzeichnet,**
**dass** die Kanalparameter in regelmäßigen zeitlichen Abständen wiederholt bestimmt werden.

16. Verfahren nach Anspruch 15,
**dadurch gekennzeichnet,**
**dass** die Kanalparameter in regelmäßigen zeitlichen Abständen mit einem variablen zeitlichen Abstand zwischen zwei aufeinanderfolgenden Bestimmungen wiederholt ermittelt werden.

17. Verfahren nach einem der Ansprüche 14 bis 16,
**dadurch gekennzeichnet,**
**dass** auf dem Übertragungskanal (3) Nachrichten (5) bidirektional übertragen werden, wobei ein Halb-Duplex Verfahren als Kanalzugriffsverfahren verwendet wird.

18. Verfahren nach einem der Ansprüche 14 bis 17,
**dadurch gekennzeichnet,**
**dass** das Kommunikationssystem aus gleichberechtigten Netzteilnehmern aufgebaut wird.

19. Verfahren nach Anspruch 18,
**dadurch gekennzeichnet,**
**dass** die gleichberechtigten Netzteilnehmer zumindest einen Sender (1) und zumindest einen Empfänger (2) umfassen, die jeweils auf den Übertragungskanal (3) zugreifen.

20. Verfahren nach Anspruch 18 oder 19,
**dadurch gekennzeichnet,**
**dass** die gleichberechtigten Netzteilnehmer in einem räumlichen Abdeckungsgebiet des Kommunikationssystems beweglich sind.

21. Verfahren nach einem der Ansprüche 14 bis 20,
**dadurch gekennzeichnet,**
**dass** anhand von gemessenen Kanalgütewerten eine Bewertung der Kanalgüte des Übertragungskanals (3) abgegeben wird, die an den Sender (1) adressiert ist.

22. Verfahren nach Anspruch 21,
**dadurch gekennzeichnet,**
**dass** die Kanalgütewerte des Übertragungskanals (3) durch eine Messung einer Symbolfehlerrate SER oder durch eine Messung einer Bitfehlerrate BER oder durch eine Messung einer Bytefehlerrate ByER oder durch eine Messung einer Paketfehlerrate PER oder durch eine Messung einer Rahmenfehlerrate FER oder durch eine Messung eines Signalrauschabstands SNR oder durch eine Messung einer Empfangsfeldstärke RSS oder durch eine Kombination der vorstehend aufgeführten Messungen quantifiziert und klassifiziert werden.

23. Verfahren nach einem der Ansprüche 14 bis 22,
**dadurch gekennzeichnet,**
**dass** mittels eines einfachen Quittierungsprotokolls ohne Zeitüberwachung ankommende Nachrichten im Kommunikationssystem bestätigt werden.

24. Verfahren nach einem der Ansprüche 14 bis 22,
**dadurch gekennzeichnet,**
**dass** mittels eines einfachen Quittierungsprotokolls mit Zeitüberwachung ankommende Nachrichten im Kommunikationssystem bestätigt werden.

25. Verfahren nach einem der Ansprüche 14 bis 24,
**dadurch gekennzeichnet,**
**dass** mittels eines Quittierungsprotokolls unter Verwendung von Folgenummern ankommende Nachrichten im Kommunikationssystem bestätigt werden.

26. Verfahren nach einem der Ansprüche 14 bis 25,
**dadurch gekennzeichnet,**
**dass** mittels eines Fensterprotokolls ankommende Nachrichten im Kommunikationssystem bestätigt werden.

27. Verfahren nach Anspruch 21 oder 22,
**dadurch gekennzeichnet,**
**dass** in den Bestätigungspaketen (5) Bits oder Bytes für eine Speicherung der Kanalgütewerte reserviert werden.

## Claims

1. A communications system with determination of channel parameters of a transmission channel, wherein the communications system provides at least one transmitter (1) and at least one receiver (2), and the determination of the channel parameters is implemented in the receiver (2) and
wherein a retransmission (4) of the channel parameters to the transmitter (1) is implemented via a closed signalisation loop comprising the transmission channel (3) and
wherein an acknowledgement mode is provided by means of acknowledgement packets (5) to be transmitted from the receiver (2) to the transmitter (1) and the acknowledgement packets (5) to be transmitted also contain the channel parameters of the signalisation loop to be retransmitted from the receiver (2) to the transmitter (1),
**characterised in that**,
as a channel parameter, a transmission function including an equalisation function determined by measurement technology is provided, so that distortions in the transmission channel (3) are compensated by the transmitter (1) in a time optimised manner.

2. The communications system according to claim 1,
**characterised in that**
a determination of the channel parameters repeated at regular time intervals is provided.

3. The communications system according to claim 2,
**characterised in that**
the time interval between two successive determinations of the channel parameters is variable.

4. The communications system according to any one of claims 1 to 3,
**characterised in that**
the transmission channel is bidirectional, and at least one semi-duplex method is used as a channel access method.

5. The communications system according to any one of claims 1 to 4,
**characterised in that**
the communications system provides an architecture with equally entitled network subscribers, in particular, with at least one equally entitled transmitter (1) and at least one equally entitled receiver (2).

6. The communications system according to claim 5,
**characterised in that**
the architecture of the communications system is time variable.

7. The communications system according to any one of claims 1 to 6,
**characterised in that**,
as a channel parameter, at least one evaluation criterion for the channel quality of the transmission channel (3) is provided.

8. The communications system according to claim 7,
**characterised in that**
the evaluation criterion for the channel quality of the transmission channel (3) contains a symbol error rate SER or a bit error rate BER or a byte error rate ByER or a packet error rate PER or a frame error rate FER or a defined signal-noise ratio SNR or a defined received field strength RSS or a combination of at least two of the above-named channel-quality values.

9. The communications system according to any one of claims 1 to 8,
**characterised in that**
the acknowledgement mode provides a simple acknowledgement protocol without time monitoring.

10. The communications system according to any one of claims 1 to 8,
**characterised in that**
the acknowledgement mode provides a simple acknowledgement protocol with time monitoring.

11. The communications system according to any one of claims 1 to 10,
**characterised in that**
the acknowledgement mode provides an acknowledgement protocol based upon a use of sequence numbers.

12. The communications system according to any one of claims 1 to 11,
**characterised in that**
the acknowledgement mode provides a window protocol.

13. The communications system according to any one of claims 1 to 12,
**characterised in that**
every acknowledgement packet (5) corresponds to a message, which provides reserved bits or bytes, which are used at least partially for the retransmission of the channel parameters.

14. A method for determining channel parameters of a transmission channel (3) in a communications system with at least one transmitter (1) and one receiver (2),
wherein the channel parameters are determined by the receiver (2),
wherein a closed signalisation loop comprising the transmission channel (3) is formed and wherein the channel parameters determined in the receiver (2) are retransmitted via the closed signalisation loop to the transmitter (1) and
wherein the communications system is operated in an acknowledgement mode and acknowledgement packets (5), into which the channel parameters of the signalisation loop to be retransmitted from the receiver (2) to the transmitter (1) are also inserted, are transmitted on the closed signalisation loop,
**characterised in that**
a transmission function including an equalisation function determined by measurement in the receiver (2) is provided as a channel parameter, so that distortions in the transmission channel (3) are compensated by the transmitter (1) in a time optimised manner.

15. The method according to claim 14,
**characterised in that**
the channel parameters are determined in a repeated manner at regular time intervals.

16. The method according to claim 15,
**characterised in that**
the channel parameters are determined in a repeated manner at regular time intervals with a variable time interval between two successive determinations.

17. The method according to any one of claims 14 to 16,
**characterised in that**
messages (5) are transmitted in a bidirectional manner on the transmission channel (3), wherein a semi-duplex method is used as the channel access method.

18. The method according to any one of claims 14 to 17,
**characterised in that**
the communications system is built up from equally entitled network subscribers.

19. The method according to claim 18,
**characterised in that**
the equally entitled network subscribers comprise at least one transmitter (1) and at least one receiver (2), each of which has access to the transmission channel (3).

20. The method according to claim 18 or 19,
**characterised in that**
the equally entitled network subscribers are mobile within a spatial coverage region of the communications system.

21. The method according to any one of claims 14 to 20,
**characterised in that**
an evaluation of the channel quality of the transmission channel (3), which is addressed to the transmitter (1), is issued on the basis of measured channel quality values.

22. The method according to claim 21,
**characterised in that**
the channel quality values of the transmission channel (3) are quantified and classified by a measurement of a symbol error rate SER or by a measurement of a bit error rate BER or by a measurement of a byte error rate ByER or by a measurement of a packet error rate PER or by a measurement of a frame error rate FER or by a measurement of the signal-noise ratio SNR or by a measurement of a received field strength RSS or by a combination of the measurements listed above.

23. The method according to any one of claims 14 to 22,
**characterised in that**
incoming messages in the communications system are acknowledged by means of a simple acknowledgement protocol without time monitoring.

24. The method according to any one of claims 14 to 22,
**characterised in that**
incoming messages in the communications system are acknowledged by means of a simple acknowledgement protocol with time monitoring.

25. The method according to any one of claims 14 to 24,
**characterised in that**
incoming messages in the communications system are acknowledged by means of an acknowledgement protocol using sequence numbers.

26. The method according to any one of claims 14 to 25,
**characterised in that**
incoming messages in the communications system are acknowledged by means of a window protocol.

27. The method according to claim 21 or 22,
**characterised in that**
bits or bytes are reserved in the acknowledgement packets (5) for a storage of the channel quality values.

## Revendications

1. Système de communications comportant la détermination des paramètres de canal d'un canal de transmission,
dans lequel le système de communications présente au moins un émetteur (1) et au moins un récepteur (2) et la détermination des paramètres de canal est effectuée dans le récepteur (2),
dans lequel une transmission en retour (4) des paramètres de canal est effectuée vers l'émetteur (1) par l'intermédiaire d'une boucle de signalisation fermée comprenant le canal de transmission (3) et
dans lequel est prévu un mode de confirmation au moyen de paquet de confirmation à transmettre (5) du récepteur (2) vers l'émetteur (1) et les paquets de confirmation à transmettre (5) contiennent également les paramètres de canal à transmettre en retour du récepteur (2) vers l'émetteur (1) de la boucle de signalisation,
**caractérisé en ce que**
en tant que paramètres de canal, une fonction de transmission techniquement déterminée dans le récepteur (2) est prévue y compris une fonction d'égalisation, de sorte que des distorsions sur le canal de transmission (3) sont compensées par optimisation de temps par l'émetteur (1).

2. Système de communications selon la revendication 1,
**caractérisé en ce que**
une détermination des paramètres de canal se répétant à des intervalles de temps réguliers est prévue.

3. Système de communications selon la revendication 2,
**caractérisé en ce que**
l'intervalle temporel entre deux déterminations successives des paramètres de canal est variable.

4. Système de communications selon l'une des revendications 1 à 3,
**caractérisé en ce que**
le canal de transmission est bidirectionnel et au moins un procédé en semi-duplex est utilisé en tant que procédé d'accès au canal.

5. Système de communications selon l'une des revendications 1 à 4,
**caractérisé en ce que**
le système de communications présente une architecture comportant des participants au réseau ayant les mêmes droits, en particulier comportant au moins un émetteur ayant les mêmes droits (1) et au moins un récepteur ayant les mêmes droits (2).

6. Système de communications selon la revendication 5,
**caractérisé en ce que**
l'architecture du système de communications est variable dans le temps.

7. Système de communications selon l'une des revendications 1 à 6,
**caractérisé en ce que,**
en tant que paramètres de canal, au moins un critère d'évaluation pour la qualité de canal du canal de transmission (3) est prévu.

8. Système de communications selon la revendication 7,
**caractérisé en ce que**
le critère d'évaluation pour la qualité de canal du canal de transmission (3) contient un taux d'erreur de symboles SER ou un taux d'erreur de bits BER ou un taux d'erreur d'octets ByER ou un taux d'erreur de paquets PER ou un taux d'erreur de trames FER ou un rapport signal-bruit défini SNR ou une intensité de champ de réception définie RSS ou une combinaison d'au moins une des qualités de canal précitées.

9. Système de communications selon l'une des revendications 1 à 8,
**caractérisé en ce que**
le mode de confirmation présente un simple protocole d'accusé de réception sans surveillance temporelle.

10. Système de communications selon l'une des revendications 1 à 8,
**caractérisé en ce que**
le mode de confirmation présente un simple protocole d'accusé de réception avec surveillance temporelle.

11. Système de communications selon l'une des revendications 1 à 10,
**caractérisé en ce que** le mode de confirmation présente un protocole basé sur l'utilisation de numéros séquentiels.

12. Système de communications selon l'une des revendications 1 à 11,
**caractérisé en ce que**
le mode de confirmation présente un protocole de fenêtre.

13. Système de communications selon l'une des revendications 1 à 12,
**caractérisé en ce que**
chaque paquet de confirmation (5) correspond à une information, qui présente des bits ou des octets réservés, qui sont utilisés au moins partiellement pour la transmission en retour des paramètres de canal.

14. Procédé de détermination des paramètres de canal d'un canal de transmission (3) dans un système de communications comportant au moins un émetteur (1) et un récepteur (2),
dans lequel les paramètres de canal sont déterminés par le récepteur (2),
dans lequel une boucle de signalisation fermée comprenant le canal de transmission (3) est formée et
dans lequel les paramètres de canal déterminés dans le récepteur (2) sont transmis en retour par l'intermédiaire de la boucle de signalisation fermée à l'émetteur (1) et
dans lequel le système de communications fonctionne dans un mode de confirmation et des paquets de confirmation (5) sont transmis par la boucle de signalisation fermée, dans lesquels les paramètres de canal de la boucle de signalisation à transmettre en retour du récepteur (2) à l'émetteur (1) sont également ajoutés
**caractérisé en ce que**
en tant que paramètres de canal, une fonction de transmission techniquement déterminée dans le récepteur (2) est prévue y compris une fonction d'égalisation, de sorte que des distorsions sur le canal de transmission (3) sont compensées par optimisation de temps par l'émetteur (1).

15. Procédé selon la revendication 14,
**caractérisé en ce que**
les paramètres de canal sont déterminés de façon répétée à des intervalles temporels réguliers.

16. Procédé selon la revendication 15,
**caractérisé en ce que**
les paramètres de canal sont déterminés de façon répétée à des intervalles temporels réguliers avec un intervalle temporel variable entre deux déterminations successives.

17. Procédé selon l'une des revendications 14 à 16,
**caractérisé en ce que**
des informations (5) sont transmises bidirectionnellement sur le canal de transmission (3), dans lequel un procédé semi-duplex est utilisé en tant que procédé d'accès au canal.

18. Procédé selon l'une des revendications 14 à 17,
**caractérisé en ce que**
le système de communications repose sur des participants au réseau ayant les mêmes droits.

19. Procédé selon la revendication 18,
**caractérisé en ce que**
les participants ayant les mêmes droits comprennent au moins un émetteur (1) et au moins un récepteur (2), qui accèdent respectivement au canal de transmission (3).

20. Procédé selon la revendication 18 ou 19,
**caractérisé en ce que**
les participants au réseau ayant les mêmes droits sont mobiles dans une zone de couverture spatiale du système de communications.

21. Procédé selon l'une des revendications 14 à 20,
**caractérisé en ce que**
en regard des valeurs des qualités de canal mesurées, une évaluation de la qualité de canal du canal de transmission (3) est attribuée, qui est adressée à l'émetteur (1).

22. Procédé selon la revendication 21,
**caractérisé en ce que**
les qualités de canal du canal de transmission (3) sont quantifiées par une mesure d'un taux d'erreur de symbole SER ou par une mesure d'un taux d'erreur de bits BER ou par une mesure d'un taux d'erreur d'octets ByER ou par une mesure d'un taux d'erreur de paquet PER ou par une mesure d'un taux d'erreur de trame FER ou par une mesure d'un rapport signal-bruit SNR ou par une mesure d'une intensité de champ de réception RSS ou par une combinaison des mesures réalisées précédemment et sont classifiées.

23. Procédé selon l'une des revendications 14 à 22,
**caractérisé en ce que**
des informations entrantes dans le système de communications sont confirmées au moyen d'un simple protocole d'accusé de réception sans surveillance temporelle.

24. Procédé selon l'une des revendications 14 à 22,
**caractérisé en ce que**
les informations entrantes dans le système de communications sont confirmées au moyen d'un simple protocole d'accusé de réception avec surveillance temporelle.

25. Procédé selon l'une des revendications 14 à 24,
**caractérisé en ce que**
des informations entrantes dans le système de communications sont confirmées au moyen d'un protocole d'accusé de réception en utilisant des numéros séquentiels.

26. Procédé selon l'une des revendications 14 à 25,
**caractérisé en ce que**
des informations entrantes dans le système de communications sont confirmées au moyen d'un protocole de fenêtre.

27. Procédé selon la revendication 21 ou 22,
**caractérisé en ce que**
des bits ou des octets pour une mémorisation des valeurs des qualités de canal sont réservés dans les paquets de confirmation (5).
